Europäisches Patentamt

European Patent Office

Office européen des brevets

(19)

(11) EP 0 712 892 B1

(12) EUROPEAN PATENT SPECIFICATION

(45) Date of publication and mention
of the grant of the patent:
**20.03.2002 Bulletin 2002/12**

(51) Int Cl.7: **C08L 23/16**, C08L 53/02

(21) Application number: **95203107.8**

(22) Date of filing: **14.11.1995**

(54) **Blends of block copolymers and metallocene polyolefins**

Mischungen aus Block-Copolymeren und Metallocen-Polyolefinen

Mélanges de copolymères-blocs et de polyoléfines à métallocène

(84) Designated Contracting States:
**BE DE ES FR GB IT NL**

(30) Priority: **17.11.1994 US 340955**
**17.11.1994 US 340967**
**17.11.1994 US 340956**

(43) Date of publication of application:
**22.05.1996 Bulletin 1996/21**

(73) Proprietor: **KRATON Polymers Research B.V.**
**1031 CM Amsterdam (NL)**

(72) Inventors:
• **Djiauw, Lie Khong, c/o Shell Oil Company**
**Houston, Texas 77002 (US)**
• **Hoxmeier, Ronald James**
**Houston, TX 77082 (US)**
• **Pease, Rodney Ray**
**Houston, TX 77095 (US)**

(74) Representative:
**Kortekaas, Marcellinus C. J. A. et al**
**KRATON Polymers Research B.V.**
**P.O. Box 384**
**2501 CJ Den Haag (NL)**

(56) References cited:
**WO-A-94/18263      WO-A-95/33006**
**US-A- 5 272 236**

**Description**

The present invention relates to block copolymer compositions containing a polyolefin.

Extrudable elastomeric compositions which can be easily compression molded or melt blown are typically prepared by blending a styrenic block copolymer and a crystalline polyolefin. Such blends have been used to make a variety of products including automotive molding and elastic films.

WO 94/18263 discloses an elastomeric film comprising a monoalkenyl arene-diene elastomeric block copolymer (preferably S-B-S: KRATON D 2104) and a metallocene polyolefin of ethylene and 7-35 mole% of a comonomer (e.g. octene).

Styrene-poly(ethylene-butylene)-styrene elastomeric block copolymers and styrene-poly(ethylene-propylene)-styrene elastomeric block copolymers have been blended with other materials such as, for example, polyolefins and tackifying resins to form extrudable elastomeric compositions which can be more easily extruded into elastic sheets having improved processing and/or bonding properties. While the additives improve the extrusion properties of the compositions and the processing and/or bonding properties of the elastic sheet, such additives may, in certain situations, have an adverse affect on the elastic properties of the resulting sheet. For example, such elastomeric block copolymers blended with large amounts of a polyolefin and/or hydrocarbon resin may have poor stress relaxation properties and stress-strain tests of such materials show significant hysteresis.

The present invention provides an elastomeric composition comprising i) one or more block copolymers having good elastomeric properties and ii) a metallocene polyolefin of ethylene and from 8% to 30% by weight of an $\alpha$-olefin comonomer having from 4 to 12 carbon atoms, having a density from 0.86 to 0.91 and a molecular weight distribution (Mw/Mn) less than 3. The polyolefin has a good distribution of ethylene and from 8% to 30% by weight of an $\alpha$-olefin comonomer having from 4 to 12 carbon atoms.

WO 95/33006, which is Art 54(3) EPC art for Contracting States BE, DE, ES, FR, GB and IT, discloses a blend of a metallocene polyolefin and one block copolymer having at least two mono-alkenyl arene blocks separated by a saturated conjugated diene block.

The present compositions suitably have a recoverable energy greater than 60%.

Other compounds which the present compositions may include comprise crystalline polyolefins and tackifying resins.

The metallocene polyolefins are polyolefins produced with a metallocene catalyst such as those described in United States Patents Nos. 5,322,728 and 5,272,236. Such metallocene polyolefins are available from Dow Chemical Company under the trademark AFFINITY or ENGAGE (ethylene/octene copolymers) and from Exxon Chemical Company under the trademark EXACT (ethylene/butene copolymers). The metallocene polyolefins have low crystallinity when ethylene is copolymerised with from 8% to 30% by weight of an $\alpha$-olefin comonomer having from 4 to 12 carbon atoms. Such polyolefins have a good distribution of ethylene and the comonomer (as further explained in the references).

The block copolymers have at least two monoalkenyl arene blocks, preferably two polystyrene blocks, separated by a block of saturated conjugated diene comprising less than 20% residual ethylenic unsaturation, prefererably a saturated polybutadiene block. The preferred styrenic block copolymers have a linear structure although branched or radial polymers or functionalised block copolymers make useful compounds.

Polystyrene-saturated polybutadiene-polystyrene (S-EB-S) and polystyrene-saturated polyisoprene-polystyrene (S-EP-S) block copolymers comprise polystyrene endblocks having a number average molecular weight from 5,000 to 35,000 and saturated polybutadiene or saturated polyisoprene midblocks having a number average molecular weight from 20,000 to 170,000. The saturated polybutadiene blocks preferably have from 35% to 55% 1,2-configuration and the saturated polyisoprene blocks preferably have greater than 85% 1,4-configuration.

The total number average molecular weight of the styrenic block copolymer is preferably from 30,000 to 250,000 if the copolymer has a linear structure. Such block copolymers may have an average polystyrene content from 10% by weight to 35% by weight.

A S-EB-S block copolymer useful in the present invention is available from the Shell Chemical Company and has a number average molecular weight of 50,000 with polystyrene endblocks each having a number average molecular weight of 7,200 and polystyrene content of 30% by weight.

These polymers may be prepared using free-radical, cationic and anionic initiators or polymerisation catalysts. Such polymers may be prepared using bulk, solution or emulsion techniques. In any case, the polymer containing at least ethylenic unsaturation will, generally, be recovered as a solid such as a crumb, a powder, a pellet, or the like.

In general, when solution anionic techniques are used, conjugated diolefin polymers and copolymers of conjugated diolefins and alkenyl aromatic hydrocarbons are prepared by contacting the monomer or monomers to be polymerised simultaneously or sequentially with an organoalkali metal compound in a suitable solvent at a temperature within the range from -150°C to 300°C, preferably at a temperature within the range from 0°C to 100°C. Particularly effective anionic polymerisation initiators are organolithium compounds having the general formula:

$$RLi_n$$

wherein R is an aliphatic, cycloaliphatic, aromatic, or alkyl-substituted aromatic hydrocarbon radical having from 1 to 20 carbon atoms; and n is an integer of 1 to 4.

In addition to sequential techniques to obtain triblocks, tetrablocks, and higher orders of repeating structures, at least anionic initiators can be used to prepare diblocks of styrene-polydiene having a reactive ("live") chain end on the diene block which can be reacted through a coupling agent to create, for example, $(S-I)_xY$ or $(S-B)_xY$ structures wherein x is an integer from 2 to 30, Y is a coupling agent, I is isoprene, B is butadiene and greater than 65 percent of S-I or S-B diblocks are chemically attached to the coupling agent. Y usually has a molecular weight which is low compared to the polymers being prepared and can be any of a number of materials known in the art, including halogenated organic compounds; halogenated alkyl silanes; alkoxy silanes; various esters such as alkyl and aryl benzoates, difunctional aliphatic esters such as dialkyl adipates and the like; polyfunctional agents such as divinyl benzene (DVB) and low molecular weight polymers of DVB. Depending on the selected coupling agent the final polymer can be a fully or partially coupled linear triblock polymer (x=2), i.e., SIYIS; or branched, radial or star configurations. The coupling agent, being of low molecular weight, does not materially affect the properties of the final polymer. DVB oligomer is commonly used to create star polymers, wherein the number of diene arms can be 7 to 20 or even higher.

It is not required in coupled polymers that the diblock units all be identical. In fact, diverse "living" diblock units can be brought together during the coupling reaction giving a variety of unsymmetrical structures, i.e., the total diblock chain lengths can be different, as well as the sequential block lengths of styrene and diene.

Since the number of S-EB or S-IB polymeric arms in a star polymer can be large, the number average molecular weights of star polymers within the invention can be much larger than those of linear S-EB-S or S-EP-S polymers, i.e., up to 500,000 or higher. Such higher molecular weight polymers have the viscosity of lower molecular weight linear polymers and thus are processable in spite of the high molecular weight.

The blockcopolymers are hydrogenated to improve weatherability and oxidation stability. In general, the hydrogenation or selective hydrogenation of the polymer may be accomplished using any of the several hydrogenation processes known in the prior art. For example the hydrogenation may be accomplished using methods such as those taught, for example, in U.S. Patent Nos. 3,494,942; 3,634,594; 3,670,054; 3,700,633; and Re. 27,145. The methods known in the prior art and useful in the present invention for hydrogenating polymers containing ethylenic unsaturation and for hydrogenating or selectively hydrogenating polymers containing aromatic and ethylenic unsaturation, involve the use of a suitable catalyst, particularly a catalyst or catalyst precursor comprising an iron group metal atom, particularly nickel or cobalt, and a suitable reducing agent such as an aluminium alkyl.

In general, the hydrogenation will be accomplished in a suitable solvent at a temperature within the range from 20°C to 100°C and at a hydrogen partial pressure within the range from 7 atm ($10^5$ Pa) to 340 atm ($10^5$ Pa), preferably 7 atm ($10^5$ Pa) to 70 atm ($10^5$ Pa). Catalyst concentrations within the range from 10 ppm (wt) to 500 ppm (wt) of iron group metal based on total solution are generally used and contacting at hydrogenation conditions is generally continued for a period of time within the range from 60 to 240 minutes. After the hydrogenation is completed, the hydrogenation catalyst and catalyst residue will, generally, be separated from the polymer.

Various tackifying resins can be used in the present invention. In particular, the purpose of the tackifying resin is to provide an elastomeric web that can act as a pressure sensitive adhesive, e.g., to bond the elastomeric sheet to another web or layer of material. Of course, various tackifying resins are known, and are discussed, e.g., in U.S Patent Nos. 4,789,699; 4,294,936; and 3,783,072. Any tackifier resin can be used which is compatible with the elastomeric polymer and the polyolefin, and can withstand the high processing (e.g., extrusion) temperatures. Generally, hydrogenated hydrocarbon resins are preferred tackifying resins, because of their better temperature stability. The following paragraphs disclose information on three specific tackifying resins, two of which (REGALREZ and ARKON P series tackifiers (REGALREZ and ARKON are trademarks)) are examples of hydrogenated hydrocarbon resins, and the ZONATAC 501 lite being a terpene hydrocarbon (ZONATAC is a trademark). Of course, while the three tackifying resins are specifically discussed, the present invention is not limited to use of such three tackifying resins, and other tackifying resins which are compatible with the other components of the composition and can withstand the high processing temperatures, and can achieve the objectives of the present invention, can also be used.

REGALREZ hydrocarbon resins, a product of Hercules, Incorporated, are fully hydrogenated α-methyl styrene-type low molecular weight hydrocarbon resins, produced by polymerisation and hydrogenation of pure monomer hydrocarbon feed stocks. Grades 1094, 3102, 6108, and 1126 are highly stable, light-colored low molecular weight, nonpolar resins suggested for use in plastics modification, adhesives, coatings, sealants, and caulks. The resins are compatible with a wide variety of oils, waxes, alkyds, plastics, and elastomers and are soluble in common organic solvents.

ZONATAC 501 lite resin, a product of Arizona Chemical Co., has a softening point of 105°C, a Gardner colour (50% in heptane) of 1 and a Gardner colour neat (pure) of 2+; (a Gardner colour of 1(50% in heptane) is approximately equal to APHA colour = 70) a specific gravity (25°/25°C) of 1.02 and a flash point (closed cup,°C) of 250°C.

Extending oils which may be used in the extrudable elastomeric composition should be capable of being melt-processed with the other components of the extrudable elastomeric composition without degrading. An exemplary extending oil is a white mineral oil available under the trade designation Drakeol 34 from the Pennzoil Company Pennreco Division. Drakeol 34 has a specific gravity of 0.864-.878 at 15°C, a flash point of 238°C, and viscosity of 370-420 SUS at 38°C. Suitable vegetable oils and animal oils or their derivatives may also be used as the extending oil.

The additional components of the extrudable elastomeric composition can be utilized over broad ranges of the amounts of each components. As a guide, the best results for elastomeric films have been obtained when utilizing a five component extrudable elastomeric composition of an elastomeric block copolymer, a metallocene polyolefin, a crystaline polyolefin, a tackifying resin, and an extending oil. The following ranges, as shown in Table 1, are exemplary. It is emphasized that these ranges are merely illustrative, serving as a guide for amounts of the various components in the composition.

TABLE 1

|  | Weight % |
| --- | --- |
| Elastomeric block copolymer, e.g S-EB-S or S-EP-S | 25-70 |
| Metallocene Polyolefin | 15-60 |
| Tackifier | 15-28 |
| Crystalline Polyolefin | 0-25 |
| Extending Oil | 0-15 |

The present invention, therefore, also relates to an elastomeric composition comprising

i) from 25% to 70% by weight of a block copolymer having at least two monoalkenyl arene blocks separated by a hydrogenated conjugated diene block,
ii) from 15% to 60% by weight of the polymer components of an elastomeric polyolefin having a density from 0.86 to 0.91, a molecular weight distribution less than 3, and good distribution of ethylene and from 8% to 30% by weight of an $\alpha$-olefin comonomer having from 4 to 12 carbon atoms,
iii)from 0% to 25% by weight of a crystalline polyolefin, and
iv) from 15% to 28% by weight of a tackifying resin.

Preferably, the present composition comprises in addition an extending oil.

While the extrudable elastomeric composition used to form the elastic film has been discussed in terms of a five-component extrudable composition (see Table 1), the crystalline polyolefin, which functions as a flow-promoter for the composition can be substituetd by other compatible flow promoters or processing aids, or can be eliminated altogether where the tackifying resin can also act as the flow promoter and/or extending oil. The extending oil, which functions as a processing aid, may also be substituted by other compatible processing aids or can be eliminated altogether where the tackifying resin can also act as the extending oil. For example, low molecular weight hydrocarbon resins such as REGALREZ tackifier can also act as the viscosity reducer and/or the extending oil, whereby the extrudable composition may contain the elastomeric polymer(s) and the tackifying resin (e.g. REGALREZ tackifier).

While the principal components of the extrudable elastomeric composition used to form the elastic sheet have been described in the foregoing, such extrudable elastomeric composition is not limited thereto, and can include other components not adversely affecting the extrudable elastomeric composition attaining the stated objectives. Exemplary materials which could be used as additional components would include, without limitation, pigments, antioxidants, stabilizers, surfactants, waxes, flow promoters, solvents, particulates, and materials added to enhance processability and pellet handling of the composition.

A suitable extrudable elastomeric composition of the present invention comprises 90 parts by weight of a linear styrenic block coplymer having two monoalkenyl arene blocks separated by a saturated conjugated diene block and from 10 to 70 parts by weight of a metallocene polyolefin having a density from 0.86 to 0.91, a molecular weight distribution less than 3, and a good distribution of ethylene and from 8% to 30% by weight of an $\alpha$-olefin comonomer having from 4 to 12 carbon atoms.

Such blends have a surprising balance of elasticity, tensile strength, tensile set at break, and solvent resistance in comparison to conventional blends of styrenic block copolymer and conventional polyolefins.

Extrudable elastic compositions were prepared by blending varying amounts of styrenic block copolymers, available from the Shell Chemical Company, with a metallocene polyolefin available from Dow Chemical Company or Exxon Chemical Company. Additional components when used include a crystalline polyolefin (Petrothene NA 601 polyethylene), a tackifying resin (REGALREZ 1126 hydrocarbon resin), and an extending oil (Drakeol 34 white mineral oil).

The term "elastic" is used herein to mean any material which, upon application of a biasing force, is stretchable, that is, elongatable at least 60 percent (i.e., to a stretched, biased length which is at least 160 percent of its relaxed unbiased length) and which, will recover at least 55 percent of its elongation upon release of the stretching, elongating force. A hypothetical example would be a 2.54 cm sample of a material which is elongatable to at least 4.1 cm and which, upon being elongated to 4.06 cm and released, will recover to a length of not more than 3.23 cm. Many elastic materials may be elongated by much more than 60 percent (i.e., much more than 160 percent of their relaxed length), for example, elongated 100 percent or more, and many of these will recover to substantially their initial relaxed length, for example, to within 105 percent of their initial relaxed length, upon release of the stretching force.

As used herein, the terms "recover" and "recovery" refer to a contraction of a stretched material upon termination of a biasing force following stretching of the material by application of the biasing force. For example, if a material having a relaxed, unbiased length of 2.54 cm is elongated 50 percent by stretching to a length of one and 3.81 cm the material would be elongated 50 percent 1.27 cm and would have a stretched length that is 150 percent of its relaxed length. If this exemplary stretched material contracted, that is recovered to a length of one and 2.79 cm after release of the biasing and stretching force, the material would have recovered 80 percent (1.02 cm) of its 1.27 cm elongation. Recovery may be expressed as [(maximum stretch length - final sample length)/(maximum stretch length - initial sample length)] X 100.

As used herein, the term "stress relaxation" refers to the percent loss of tension or load between the maximum load or force encountered after elongating an elastic material at a specified rate of extension to a predetermined length (or the load or force measured at some initial length) and the remaining load or force measured after the sample has been held at that length for a specified period of time, for example, from 0 minutes to 30 minutes. Except where otherwise noted for the present invention, stress relaxation is expressed as a percentage loss of the initial load encountered at a specified extension of an elastic material. The stress relaxation is determined by calculating the difference between the initial maximum load measured after elongating an elastic material at a rate of 50.8 cm per minute to an elongation of 160 percent (i.e., to 260 percent of the material's initial length) and the remaining load measured after that sample was held at that length for 30 minutes divided by the initial maximum load at that length. Testing may be performed on an Instron Model 1122 Universal Test Machine using a 100 mm by 7.62 cm sample attached to jaw faces that have a width of 7.62 cm and a height of 2.54 cm. Stress relaxation after 30 minutes at, for example, an elongation of 160 percent (i.e., to 260 percent of the material's initial length - from 100 mm to 260 mm) may be expressed as a percentage utilizing the following equation: stress relaxation = (peak load$_{160\%}$ - load$_{160\%}$ @30 min)/(peak load$_{160\%}$)*100.

As used herein, the term "tensile strength" refers to the resistance of an elastic material to being elongated as determined in accordance with ASTM D-412 using 3mm wide and 0.15 cm thick dumbbell samples that are cut from films. Films formed from a blend of an elastomeric block copolymer and other materials such as, for example, a polyolefin (metallocene and/or crystalline), a tackifier, and/or an extending oil were compression molded. Tensile testing may be performed on an Instron Model 1122 Universal Test Machine. An alternative tensile test specimen is a 100 mm by 7.62 cm sample attached to jaw faces that have a width of 7.62 cm and a height of 2.54 cm.

As used herein, the term "recoverable energy" refers to the energy stored by an elastic material when it is elongated to a specified length. Recoverable energy is measured utilizing a tensile testing apparatus such as, for example, an Instron Model 1122 Universal Test Machine by elongating a sample of an elastic material sample at 2.54 cm/minute to 150 percent elongation (i.e., to 250 percent of the material's initial relaxed length) and cycling back to zero load for 1 hysteresis loop. The percent recoverable energy is determined by dividing the area under the retraction curve of the first hysteresis loop by the area under the elongation curve of the first hysteresis loop and then multiplying by 100.

As used herein, the term "loss" refers to the decrease in resistance to elongation of an elastic material after that elastic material has been elongated to a specified length and then allowed to recover. The loss is measured utilizing a tensile testing apparatus such as, for example, an Instron Model 1122 Universal Test Machine by elongating a sample of an elastic material sample at 2.54cm/minute to 150 percent elongation (i.e., to 250 percent of the material's initial relaxed length), cycling back to zero load for 1 hysteresis loop and then elongating the material again at 2.54 cm/minute to 150 percent elongation. The percent loss is determined by dividing the area under the elongation curve of the second hysteresis loop by the area under the elongation curve of the first hysteresis loop, subtracting that value from one (1), and then multiplying by 100.

As used herein, the terms "set" or "percent set" refer to the deformation of an elastic material measured while the material is in a relaxed condition immediately after the material was released from a specified elongation, without allowing the material to snap back. The percent set is determined by dividing the zero load extension after 1 cycle by the initial sample gauge length, and then multiplying by 100. The zero load extension is the distance that the jaws of the tensile test equipment move at the beginning of the second cycle before a load is registered by the tensile test equipment. The set may be measured utilizing a tensile testing apparatus such as, for example, an Instron Model 1122 Universal Test Machine by elongating a sample of an elastic material at 2.54 cm/minute to 150 percent elongation and cycling back to zero load for 1 hysteresis loop.

As used herein, the term "set at break" refers to the deformation of an elastic material measured after the material has been elongated to break. The set at break is measured in accordance with ASTM D 412 in which, ten minutes after the sample is broken, the two pieces of the sample are fitted together so they substantially match up over the full area of the break. The percent set at break is determined by subtracting the original distance between the bench marks from the distance between the joined pieces, dividing by the original distance between the bench marks and then multiplying by 100.

As used herein, the "number average molecular weight" was determined utilizing conventional gel permeation chromatography techniques with a polystyrene standard. All molecular weights are measured prior to hydrogenation which will increase them by a small amount.

The present invention further relates to an elastomeric composition which comprises more than one block copolymer.

Accordingly, the present invention also relates to an elastomeric composition which comprises a mixture of a high molecular weight styrenic block copolymer, a low molecular weight styrenic block copolymer, and a metallocene polyolefin having a density from 0.86 to 0.91, a molecular weight distribution less than 3, and good distribution of ethylene and from 8% to 30% by weight of an $\alpha$-olefin comonomer having from 4 to 12 carbon atoms. Such compositions are improved extension blowing compositions. Compositions having from 10% to 30% by weight of the metallocene polyolefin have improved elasticity while maintaining excellent properties for film extrusion processes.

Such an extrudable composition suitably comprises i) from 20% to 35% by weight of a first hydrogenated block copolymer having a high molecular weight, ii) from 8% to 33% by weight of a second hydrogenated block copolymer having a low molecular weight, wherein the ratio of the molecular weight of the first hydrogenated block copolymer to the molecular weight of the second hydrogenated block copolymer is greater than 1.1:1, iii) from 10% to 30% by weight of a metallocene polyolefin having a density from 0.86 to 0.91, a molecular weight distribution less than 3, and good distribution of ethylene and from 8% to 30% by weight of an $\alpha$-olefin comonomer having from 4 to 12 carbon atoms, iv) from 10% to 30% by weight of a non-aromatic processing oil, and v) from 5% to 15% by weight of a polymer which is compatible with the hydrogenated block copolymers.

The first hydrogenated block copolymer comprises at least two blocks A which are predominantly polymerised alkenyl arene, and at least one block B which is predominantly polymerised conjugated diene, wherein the first hydrogenated block copolymer comprises from 1 to 60 percent by weight polymerised alkenyl arene, a number average molecular weight within the range of 55,000 to 200,000, preferably between 60,000 and 110,000, and less than 20% residual ethylenic unsaturation in the conjugated diene block.

The second hydrogenated block copolymer comprises at least two blocks A which are predominantly polymerised alkenyl arene, and at least one block B which is predominantly polymerised conjugated diene, wherein the second hydrogenated block copolymer comprises from 1 to 60 percent by weight polymerized alkenyl arene, a number average molecular weight within the range of 15,000 to 85,000, preferably between 30,000 and 60,000, and less than 20% residual ethylenic unsaturation of the conjugated diene block.

The elastomeric films which can be produced from the above compositions are films of 0.0025 to 0.0125 cm in thickness and are preferably produced by extrusion casting or extrusion blowing the composition described above using extrusion equipment, conditions, and techniques known in the art.

The process for producing an elastomeric film of this invention comprises the steps of providing a polymeric composition as described above; extruding the polymeric composition through a die, the die having a gap greater than 0.0125 cm and less than 0.305 cm; expanding the extruded film to a thickness of between 0.00125 cm and 0.0254 cm by application of differential pressure by a gas; and rapidly cooling the expanded extruded film.

The hydrogenated block copolymers have at least two alkenyl arene polymer blocks A, which may be selected independently and at least one elastomeric conjugated diene polymer block B. A preferred structure of the block copolymer is $(A-B)_n-A$ where n is an integer of 1 to 20.

Blocks A and B may be either homopolymer, random or tapered copolymer blocks as long as each block is predominantly the class of the monomer characterizing the block. For example, the block copolymer may contain A blocks which are styrene/alpha-methylstyrene copolymer blocks or styrene/butadiene random or tapered copolymer blocks as long as the blocks individually predominate in alkenyl arenes. The A blocks are preferably monoalkenyl arene homopolymer blocks. The term "monoalkenyl arene" will be taken to include particularly those of the benzene series such as styrene and its analogs and homologs including o-methylstyrene, p-methylstyrene, p-tert-butylstyrene, 1,3-dimethylstyrene, alpha-methylstyrene and other ring alkylated styrenes, particularly ring-methylated styrenes, and other monoalkenyl polycyclic aromatic compounds such as vinyl naphthalene, vinyl anthracene and the like. The preferred monoalkenyl arenes are monovinyl monocyclic arenes such as styrene and alpha-methylstyrene, and styrene is particularly preferred.

By predominantly being the class of the monomer characterizing the block, it is meant that more than 75% by weight of the A blocks are alkenyl arene monomer units, and more than 75% by weight of the B blocks are conjugated diene monomer units.

The blocks B may comprise homopolymers of conjugated diene monomers, copolymers of two or more conjugated dienes, and copolymers of one or more of the dienes with a monoalkenyl arene as long as the blocks B are predominantly conjugated diene units. The conjugated dienes preferably contain from 4 to 8 carbon atoms. Examples of such suitable conjugated diene monomers include: 1, 3-butadiene (butadiene), 2-methyl-1,3-butadiene (isoprene), 2,3-dimethyl-1,3-butadiene, 1,3-pentadiene (piperylene), 1,3-hexadiene, and the like.

Preferably, the block copolymers of conjugated dienes and alkenyl arene hydrocarbons which may be utilized include those butadiene derived elastomers which have 1,2-microstructure contents prior to hydrogenation of from 7 to 100 percent, more preferably from 25 to 65 percent, and most preferably from 35 to 55 percent. The proportion of the copolymer which is alkenyl arene monomer units is between 1 and 60 percent by weight of the block copolymer, preferably between 5 and 50 percent, more preferably between 15 and 45 percent by weight and most preferably between 20 and 40 percent by weight.

The block copolymers may be produced by any block polymerisation or copolymerisation procedures including the well known sequential addition of monomer technique, incremental addition of monomer technique or coupling technique as illustrated in, for example, U.S. Patent Nos. 3,251,905; 3,390,207; 3,598,887 and 4,219,627. As is well known in the block copolymer art, tapered copolymer blocks can be incorporated in the multiblock copolymer by copolymerising a mixture of conjugated diene and alkenyl arene monomers utilizing the difference in their copolymerisation reactivity rates. Various patents describe the preparation of multiblock copolymers containing tapered copolymer blocks including U.S. Patent Nos. 3,251,905; 3,265,765; 3,639,521 and 4,208,356.

It should be observed that the above-described polymers and copolymers may, if desired, be readily prepared by the methods set forth above. However, since many of these polymers and copolymers are commercially available, it is usually preferred to employ the commercially available polymer as this serves to reduce the number of processing steps involved in the overall process.

The second block copolymer of the present invention has a lower molecular weight than the first, and has been found to lower the melt temperatures and improve processability of the composition. But as opposed to other methods of lowering the melt temperatures, adding a lower molecular weight block copolymer was found to be significantly less detrimental to film forming ability.

The non-aromatic processing oil component of the invention composition preferably contains less than about 10% by weight aromatics as determined by clay-gel analysis. Acceptable softening oils are also referred to in the industry as softening oils, mineral oils, and extender oils. These oils are commonly incorporated in rubber compositions to decrease the cost of the composition and to lower the modulus of the composition. Non-aromatic processing oils of the present invention will preferably have a flash temperature between 170°C and 300°C.

Synthetic extender oils, such as low molecular weight liquid polybutadiene, may also be used as the non-aromatic processing oil.

The amount of non-aromatic processing oil required is preferably between 10% and 30% by weight and most preferably between 15% and 25% by weight of the composition.

The elastic film compositions of the present invention may be manufactured using polymer blending techniques currently practiced in the art, such as batch and continuous mixing methods employing mixing equipment like Banbury batch mixers, Farrell continuous mixers and twin-screw extruders. Well mixed compositions are obtainable when mixing is carried out at a melt temperature in the range between 200 to about 230°C. Films extruded with inadequately mixed compositions usually would show a high intensity of gels or a fish eye appearance as well as a tendency to block.

Extrusion blown films may be prepared from the compositions of this invention using standard extrusion equipment, standard techniques and typical conditions. Standard techniques include, but are not limited to extrusion blown and extrusion casting processes. For the extrusion blown process, a polyolefin type extruder screw is preferred, but other designs are also acceptable. A die gap of 0.0127 to 0.305 cm is acceptable, a gap of 0.0254 to 0.203 cm is preferred, and a gap of 0.051 to 0.102 cm is most preferred. Die temperatures of 200°C to 230°C are acceptable and between 204°C and 226°C are preferred. A blow up ratio of 2 to 1 is preferred. Rapid cooling of the extruder blown film is preferably performed by a dual lip cooling ring. Due to the low modulus of the film produced from the composition of this invention, a rollered collapsing frame is preferred to avoid bubble chatter.

A film which is extrusion blown from the composition of this invention is between 0.00127 cm and 0.0254 cm in thickness, and is preferably between 0.0254 and 0.0152 in thickness and is most preferably between 0.00254 and 0.0127 cm in thickness.

The composition of this invention may be formed to a film with a low modulus, and excellent tensile strength and high ultimate elongation in both machine and transverse directions, low permanent set and high recoverable energy. This composition is also made of less expensive components than alternative elastomeric film compositions. Films having 100% modulus of less than 13.6 atm ($10^5$ Pa) in both the machine and transverse directions are obtainable with the composition of this invention. Films made from the composition of this invention have recoverable energy of greater than about 70% and permanent set less than 12%

Comparative Examples A and B

In Comparative Example A, the S-EB-S elastomer described above was compounded in a preferred formulation for making elastomeric films wherein the formulation contained 63% by weight of the S-EB-S elastomer, 20% by weight of a polyethylene resin, and 17% by weight of a tackifying resin. Comparative Examples B demonstrates complete replacement of the S-EB-S elastomer with Dow's ENGAGE EG 8100 elastomer (ENGAGE is trademark), an elastomeric polyolefin having a molecular weight distribution less than 3, good dispersion of 76% by weight of ethylene and 24% by weight of octene, and a density of 0.87.

Example 1-3

Examples 1, 2, and 3 represent replacement of the crystalline polyolefin in Comparative Example A with a metallocene polyolefin having a molecular weight distribution less than 3, a good dispersion of ethylene and an $\alpha$-olefin comonomer having from 4 to 8 carbon atoms, and a density from 0.86 to 0.91.

The weight % of each component for Comparative Examples A and B and Examples 1-3 is shown in Table 2. Extrudable compositions for each Example were pressed from pellets into films using heat and pressure according to conventional compression molding techniques. The films were cut into dumbbell shaped samples that were 3mm wide and 0.15 cm thick. The stress-strain properties of the pressed films were determined in accordance with ASTM D-412 utilizing a Constant Rate of Extension Tester, Instron Model 1122 Universal Testing Instrument. Each sample was placed lengthwise in jaw faces, 7.62 cm wide x 2.54 cm height, with a jaw span or separation of 5.08 cm. The Instron Model 1122 Universal Test Instrument crosshead speed was set at 25.4 cm per minute for the first series of tests measuring the Stress-Strain properties reported in Table 3. Measurements were taken of the sample's tensile strength, elongation at break, set, and modulus or load at 100% elongation (i.e., at 200% of the materials initial relaxed length) and 300% elongation (i.e., at 400% of the materials initial relaxed length).

Hysteresis properties were measured using the Instron Model 1122 Universal Test Machine with the crosshead speed set at 2.54 cm per minute. The loss, dynamic, recoverable energy and set were determined as previously described in the "Definition" section and are reported in Table 3.

The results show that Comparative Example B has significantly reduced recoverable energy and is thus has poor elastomeric properties in comparison to Comparative Example A. Examples 1-3 have improved tensile strength and improved recoverable energy in comparison to Comparative Example A.

Table 2

| Example | A | B | 1 | 2 | 3 |
|---|---|---|---|---|---|
| S-EB-S block copolymer a) | 63 | | 63 | 63 | 63 |
| Metallocene polyolefin | | | | | |
| 1 b) | | 63 | 20 | | |
| 2 c) | | | | 20 | |
| 3 d) | | | | | 20 |
| Crystalline Polyolefin e) | 20 | 20 | | | |
| Tackifying resin f) | 17 | 17 | 17 | 17 | 17 |

a. Shell KRATON G1659 S-EB-S polymer (70% coupled, 30% styrene, Target Mn = 7,200-35,600-7,200) from Shell Chemical Co.

b. ENGAGE EG 8100 polymer (24% octene, dens. 0.87) from Dow.

c. AFFINITY PL1845 polymer (9.5% octene, dens. 0.903) from Dow.

d. AFFINITY PL 1880 polymer (12% octene, dens. 0.902) from Dow.

e. PETROTHENE NA 601-04 polyethylene from Quantum Chemical Co.

f. REGALREZ 1126 hydrocarbon resin from Hercules Chemical Co.

Table 3

| Example | A | B | 1 | 2 | 3 |
|---|---|---|---|---|---|
| Melt flow, g/10' 190C/2.16 Kg | 16 | 4.2 | 4.9 | 5.9 | 5 |
| Stress-strain Properties: (25.4 cm/min crosshead speed) | | | | | |
| 100% modulus, atm ($10^5$ Pa) | 12.9 | 24.4 | 7.2 | 12.3 | 12.3 |
| 300% modulus, atm ($10^5$ Pa) | 18.7 | 35.5 | 16.0 | 22.5 | 22.5 |
| 500% modulus, atm ($10^5$ Pa) | 28.6 | 49.0 | 25.9 | 38.8 | 38.1 |
| Tensile strength, atm ($10^5$ Pa) | 94.0 | 105.5 | 96.0 | 117.1 | 122.6 |
| Elongation at break, % | 58.6 | 58.0 | 61.3 | 59.2 | 59.9 |
| Hysteresis Properties: (Loop 1, 2.54 cm/min crosshead speed) | | | | | |
| Recovery energy, % | 66 | 47 | 78 | 74 | 75 |
| Hysteresis set, % | 14 | 23 | 11 | 14 | 14 |
| Unloading stress, @ 100% elongation, atm ($10^5$ Pa) | | | | | |
| First loading | 9.1 | 12.4 | 8.5 | 9.5 | 9.5 |
| Second loading | 8.8 | 12.1 | 8.2 | 9.2 | 9.2 |

Examples 4 and 5

Examples 4 and 5 represent replacement of a portion of the block copolymer in Comparative Example A with a metallocene polyolefin having a molecular weight distribution less than 3, a good dispersion of ethylene and an α-olefin comonomer having from 4 to 8 carbon atoms, and a density from 0.86 to 0.91.

The weight % of each component for Comparative Example A and Examples 4 and 5 is shown in Table 4. Extrudable compositions for each Example were used to compression mold films as described for Comparative Example A. The sample were tested for properties as described for Comparative Example A and the results are shown in Table 5. In addition, stress relaxation was measured for Examples 4 and 5 and Comparative Example A using the Instron Model 1122 Universal Test Machine and determined as previously described. The results are reported in Table 5.

The compositions of Examples 4 and 5 have improved modulus and stress relaxation in comparison to Comparative Example A.

Examples 6, C and D

A blend of 90 parts by weight of styrenic block copolymer and 10 parts by weight of a metallocene polyolefin were dissolved in toluene at 90°C and coagulated with 3 volumes of methanol, then dried in a vacuum oven. The block copolymer was an S-EB-S block copolymer having number average molecular weights of 7,200 for the polystyrene blocks and 35,300 for the saturated butadiene blocks and having 40% 1,2-addition. The metallocene polyolefin was EXACT 4011 polymer (available from Exxon Chemical) which is a copolymer of ethylene and 17% by weight of 1-butene.

Table 4

| Example | A | 4 | 5 |
|---|---|---|---|
| S-EB-S block copolymer a) | 63 | 41.5 | 41.5 |
| Metallocene polyolefin | | | |
| 1 b) | | 41.5 | |

a. Shell KRATON G1659 polymer sold by Shell Chemical Co.

b. ENGAGE EG 8150 polymer (25% octene, dens. 0.868) manufactured by Dow Chemical Co.

Table 4   (continued)

| Example | A | 4 | 5 |
|---|---|---|---|
| Metallocene polyolefin | | | |
| 2 c) | | | 41.5 |
| Tackifying resin d) | 17 | 17 | 17 |
| Crystalline Polyolefin e) | 20 | 0 | 0 |

c. EXACT 4038 polymer manufactured by Exxon Chemical Co., USA.

d. REGALREZ 1126 resin manufactured by Hercules

e. PETROTHENE NA 601-04 resin sold by Quantum Chemical.

Table 5

| Example | A | 4 | 5 |
|---|---|---|---|
| Melt flow, 190C/2.16 KG | 16 | 2.3 | 27 |
| Hysteresis | | | |
| Recoverable energy, % | 67 | 67 | 63 |
| Stress @150 % extension | 198 | 225 | 247 |
| Hysteresis set, % | 14 | 15 | 16 |
| Unloading stress, atm ($10^5$ Pa) | | | |
| Cycle 1 | 9.1 | 9.9 | 10.4 |
| Cycle 2 | 8.8 | 9.7 | 10.1 |
| Tensile properties | | | |
| Tensile strength, atm ($10^5$ Pa) | 94.0 | 97.9 | 89.0 |
| Ultimate elongation, % | 64.7 | 66.1 | 77.6 |
| 100 % modulus, atm ($10^5$ Pa) | 12.9 | 13.3 | 15.1 |
| 300 % modulus, atm ($10^5$ Pa) | 18.7 | 21.8 | 23.2 |
| 500 % modulus, atm ($10^5$ Pa) | 28.6 | 36.2 | 33.4 |
| Stress relaxation, % (after 30 min at 160% elongation and at 50.8 cm/min crosshead speed) | 34 | 30 | 32 |

Compression molded films were then prepared at 140°C and 0.05 cm thickness of the blend and the components and measured for comparison properties as shown in Table 6.

Table 6

| Example | 6 | C | D |
|---|---|---|---|
| Components, parts by weight | | | |
| S-EB-S Block Copolymer | 90 | 90 | 0 |
| Metallocene Polyolefin | 10 | 0 | 10 |
| Tensile properties | | | |
| Tensile strength, atm ($10^5$ Pa) | 456.3 | 347.3 | 422.2 |
| Elongation @ Break, % | 810 | 720 | 1060 |
| Tensile Set @ Break | 0 | 50 | 400 |

As shown in Table 6, the blend had greater tensile strength and lower tensile set than either of the components.

Examples 7-10, C, E

Blends of 90 parts by weight of a styrenic block copolymer and various amounts of a metallocene polyolefin were dissolved in toluene at 90°C and coagulated with 3 volumes of methanol, then dried in a vacuum oven. The block copolymer was an S-EB-S block copolymer having number average molecular weights of 7,200 for the polystyrene blocks and 35,300 for the saturated butadiene blocks and having 40% 1,2-addition. The metallocene polyolefin was ENGAGE 8100 polymer (available from Dow Chemical) which is a copolymer of ethylene and 24% by weight of 1-octene and has a density of 0.87.

Compression molded films were then prepared at 140°C and 0.05cm thickness of the blend and the components and measured for comparison properties as shown in Tables 7 and 8.

Table 7

| Example | C | 7 | 8 |
|---|---|---|---|
| Components, parts by weight | | | |
|     S-EB-S Block Copolymer | 90 | 90 | 90 |
|     Metallocene Polyolefin | 0 | 60 | 135 |
| Tensile properties | | | |
|     Tensile strength, atm ($10^5$ Pa) | 347.3 | 333.7 | 252.0 |
|     Elongation @ Break, % | 720 | 850 | 870 |
|     Tensile Set @ Break | 50 | 75 | 100 |

Table 8

| Example | 9 | 10 | E |
|---|---|---|---|
| Components, parts by weight | | | |
|     S-EB-S Block Copolymer | 90 | 90 | 0 |
|     Metallocene Polyolefin | 270 | 810 | 10 |
| Tensile properties | | | |
|     Tensile strength, atm ($10^5$ Pa) | 204.3 | 136.2 | 204.3 |
|     Elongation @ Break, % | 920 | 910 | 1090 |
|     Tensile Set @ Break | 100 | 150 | 200 |

Examples 11 and D

A blend of 90 parts by weigh of a styrenic block copolymer and a metallocene polyolefin were dissolved in toluene at 90°C and coagulated with 3 volumes of methanol, then dried in a vacuum oven. The block copolymer was an S-EB-S block copolymer having number average molecular weights of 19,000 for the polystyrene blocks and 88,000 for the saturated butadiene blocks and having 40% 1,2-addition. The metallocene polyolefin was EXACT 4011 polymer (available from Exxon Chemical) which is a copolymer of ethylene and 17% by wieght of 1-butene.

Compression molded films were then prepared at 140°C and 0.05 cm thickness of the blend and the components and measured for comparison properties as shown in Table 9.

Table 9

| Example | D | 11 |
|---|---|---|
| Components, parts by weight | | |
|     Styrenic Block Copolymer | 0 | 90 |
|     Metallocene Polyolefin | 10 | 60 |

Table 9   (continued)

| Example | D | 11 |
|---|---|---|
| Tensile properties | | |
| Tensile strength, atm ($10^5$ Pa) | 422.2 | 408.6 |
| Elongation @ Break, % | 1060 | 890 |
| Tensile Set @ Break | 400 | 75 |

EXAMPLES 12, 13 and F

The low molecular weight hydrogenated block copolymer used in the following examples was a hydrogenated styrene-butadiene-styrene block copolymer with a total molecular weight of 49700 as measured by GPC with a polystyrene standard and 30% by weight polystyrene endblocks. The 1,2-microstructure content of the midblock segment prior to hydrogenation is 40%. Hydrogenation had saturated more than 95% of the original midblock ethylenic unsaturation.

The high molecular weight block copolymer was also a hydrogenated styrene-butadiene styrene block copolymer. The high molecular weight block copolymer had 32% by weight of polystyrene endblocks and a total molecular weight of 68000 measured by GPC with a polystyrene standard. The 1,2-microstructure content of the midblock segment prior to hydrogenation was 40%, and hydrogenation had saturated more than 95% of the original midblock ethylenic unsaturation.

The metallocene polyolefin was XU-58320, an experimental copolymer of ethylene and 1-octene, manufactured by Dow Chemical Co. The metallocene polyolefin has a density from 0.86 to 0.91, a molecular weight distribution less than 3, and good distribution of ethylene and from 8% to 30% by weight of the octene.

The endblock compatible resin employed was a high-softening-point pure monomer hydrocarbon resin derived from a styrene monomer, Piccolastic D125. This resin was manufactured by Hercules Inc. The resin has a ring ball softening point of 125°C and a melt viscosity of 100 poises ($10^{-1}$ Pa.s) at 185°C.

A non-aromatic processing oil, Penreco 4434 oil, manufactured by Pennzoil Company was employed. The processing oil exhibits the following typical properties: viscosity by ASTM D-445 at 38°C of 370 to 410 SUS; specific gravity of 0.864 to 0.878 at 15°C; and flash point by ASTM D-92 of about 238°C.

Additives are included in the following examples and comparative examples include a heat stabilizer, an antiblocking agent and a slip agent to improve stability of the composition and limit the blocking tendency of the blown films.

The melt index of the blend compositions was determined according to ASTM Method D-1238, condition E. Tests were conducted using a 2.4 kilogram plunger weight and measurements were carried out at 190°C.

The ultimate tensile strength and elongation were determined according to ASTM D-882-81 method using an Instron Model 1122 tester. The properties of the film were measured in the direction of extrusion of the film (machine direction, MD); and in the direction perpendicular to the direction of extrusion (cross-machine direction, CD).

To determine permanent set, a specimen was prepared according to ASTM D-882-81. Test specimens were cut along the direction of extrusion of the film (MD). An Instron Model 1122 tester was used to subject the specimens to maximum extension of 150% strain and then relaxation at the same rate as the extension until the specimen was in the relaxed state (near zero force). Subsequently another loading cycle was imposed. The length at which the specimen reaches its relaxed state in the unloading cycle was measured and the permanent set was then calculated according to the following equation:

$$\text{Perm. set} = 100\% \times \frac{(\text{length at relaxed state - original length})}{(\text{length at max extension - original length})}$$

The recoverable energy is the ratio of the energy released during the unloading cycle to the energy stored during the loading cycle.

Examples 12 and 13 and Comparative Example F were prepared by mixing the hydrogenated block copolymers with other ingredients as shown in Table 10 with a twin-screw extruder (diameter=2.03 cm, screw length to diameter ratio, L/d, of 20:1). The elastic films were obtained by a cast film process using a 1.9 cm diameter single screw Brabender extruder equipped with a 30.5 cm width slit die and 0.05 cm die gap. Thin gage (0.005-0.0127 cm) films were obtained at 200C melt temperatures.

Examples 12 and 13 were prepared by adding 25 and 33 parts per hundred parts of hydrogenated block copolymers, respectively, of metallocene polyolefin in the composition, whereas no metallocene polyolefin was added in the composition of Comparative Example F. The films produced by addition of metallocene polyolefin show good elastic recovery and mechanical properties, as is indicated by the properties included in Table 10.

TABLE 10

| | Examples | | Comparative Ex. |
|---|---|---|---|
| | 12 | 13 | F |
| **Composition, Part Weight** | | | |
| High Mw Block Copolymer | 60 | 60 | 60 |
| Low Mw Block Copolymer | 40 | 40 | 40 |
| Metallocene Polyolefin | 25 | 33 | |
| Piccolastic D125 | 20 | 20 | 20 |
| Process oil, Penreco 4434 | 45 | 45 | 45 |
| Additive package | 1.5 | 1.5 | 1.5 |
| **Film Casting** | | | |
| Melt temperature, °C | 200 | 200 | 200 |
| Film Thickness, mils | 5 | 5 | 5 |
| **Physical Properties** | | | |
| Melt index, gm/10min | 1.8 | 2.2 | 1.8 |
| **Tensile Strength, atm ($10^5$ Pa)** | | | |
| Machine direction | 122.6 | 110.3 | 177.1 |
| Transverse direction | 115.8 | 95.3 | 173.0 |
| **Ultimate elongation, %** | | | |
| Machine direction | 920 | 850 | 930 |
| Transverse direction | 840 | 790 | 910 |
| **100% modules, atm ($10^5$ Pa)** | | | |
| Machine direction | 10.2 | 12.3 | 15.7 |
| Transverse direction | 8.9 | 8.9 | 7.5 |
| **300% modules, atm ($10^5$ Pa)** | | | |
| Machine direction | 18.4 | 21.1 | 26.6 |
| Transverse direction | 15.7 | 15.0 | 12.9 |
| **After 150 % extension cyclic test, MD,** | | | |
| Permanent set, % | 11 | 12 | 10 |
| Recoverable energy, % | 72 | 70 | 68 |

## Claims

### Claims for the following Contracting States : BE, DE, ES, FR, GB, IT

1. An elastomeric composition comprising a first hydrogenated block copolymer, a second hydrogenated block copolymer and a metallocene polyolefin of ethylene and from 8% to 30% by weight of an α-olefin comonomer having from 4 to 12 carbon atoms, having a density from 0.86 to 0.91 and a molecular weight distribution (Mw/Mn) of less than 3, wherein both the first and second hydrogenated block copolymers comprise at least two blocks A which are predominantly polymerised monoalkenyl arene and at least one block B which is predominantly polymerised conjugated diene, and comprise less than 20% residual ethylenic unsaturation in the conjugated diene block, wherein the ratio of the number average molecular weight of the first hydrogenated block copolymer to the number average molecular weight of the second hydrogenated block copolymer is greater than 1.1:1.

2. The composition according to claim 1, comprising one block copolymer which has the structure S-EB-S.

3. The composition according to claim 1 or 2, wherein the comonomer in the metallocene polyolefin is octene.

4. A composition according to any one of claims 1 to 3 comprising i) 90 parts by weight of the block copolymers having at least two monoalkenyl arene blocks separated by a saturated conjugated diene block and ii) from 10 to 70 parts by weight of the polymer components of the metallocene polyolefin having a density from 0.86 to 0.91, a molecular weight distribution less than 3.

5. An elastomeric composition comprising

   i) from 25% to 70% by weight of a block copolymer having at least two monoalkenyl arene blocks separated by a hydrogenated conjugated diene block comprising less than 20% residual ethylenic unsaturation;
   ii) from 15% to 60% by weight of a metallocene polyolefin of ethylene and from 8% to 30% by weight of an $\alpha$-olefin comonomer having from 4 to 12 carbon atoms, having a density from 0.86 to 0.91 and a molecular weight distribution (Mw/Mn) less than 3;
   iii) from 0% to 25% by weight of a crystalline polyolefin; and
   iv) from 15% to 28% by weight of a tackifying resin.

6. The composition according to any one of claims 1 to 3 comprising

   i) from 20% to 35% by weight of a first hydrogenated block copolymer comprising at least two blocks A which are predominantly polymerised alkenyl arene and at least one block B which is predominantly polymerized conjugated diene, the first hydrogenated block copolymer comprising from 1 to 60 percent by weight of polymerised monoalkenyl arene, having a number average molecular weight within the range of 55,000 to 200,000, and comprising less than 20% residual ethylenic unsaturation in the conjugated diene block;
   ii) from 8% to 33% by weight of a second hydrogenated block copolymer comprising at least two blocks A which are predominantly polymerised monoalkenyl arene and at least one block B which is predominantly polymerized conjugated diene, the second hydrogenated block copolymer comprising from 1 to 60 percent by weight of polymerised monoalkenyl arene, having a number average molecular weight within the range of 15,000 to 85,000, and comprising less than 20% residual ethylenic unsaturation of the conjugated diene block, wherein the ratio of the number average molecular weight of the first hydrogenated block copolymer to the number average molecular weight of the second hydrogenated block copolymer is greater than 1.1:1;
   iii)from 10% to 30% by weight of the metallocene polyolefin having a density from 0.86 to 0.91, a molecular weight distribution less than 3,
   iv) from 10% to 30% by weight of a non-aromatic processing oil, and
   v) from 5% to 15% by weight of a polymer which is compatible with the hydrogenated block copolymers.

7. The composition according to claim 6 wherein the number average molecular weight of the first hydrogenated block copolymer is between 60,000 and 110,000.

8. The composition according to claim 6 or 7 wherein the number average molecular weight of the second hydrogenated block copolymer is between 30,000 and 60,000.

9. The composition according to any one of claims 1 to 6, which further comprises an extending oil.

10. A composition according to any one of claims 1 to 9 wherein the metallocene polyolefin has a good distribution of ethylene and from 8% to 30% by weight of an $\alpha$-olefin comonomer having from 4 to 12 carbon atoms.

11. A process for producing an elastomeric film comprising the steps of providing a composition as described in any one of the preceding claims or an elastomeric composition comprising i) one block copolymer having at least two monoalkenyl arene blocks separated by a saturated conjugated diene block comprising less than 20% residual ethylenic unsaturation and ii) a metallocene polyolefin of ethylene and from 8% to 30% by weight of an $\alpha$-olefin comonomer having from 4 to 12 carbon atoms, having a density from 0.86 to 0.91 and a molecular weight distribution (Mw/Mn) less than 3; extruding the composition through a die, the die having a gap greater than 0.0125 cm and less than 0.305 cm; expanding the extruded film to a thickness of between 0.00125 cm and 0.0254 cm by application of differential pressure by a gas; and rapidly cooling the expanded extruded film.

**12.** A film comprising the composition according to any one of claims 1 to 10.

**Claims for the following Contracting State : NL**

**1.** An elastomeric composition comprising i) one or more block copolymers having at least two monoalkenyl arene blocks separated by a saturated conjugated diene block comprising less than 20% residual ethylenic unsaturation and ii) a metallocene polyolefin of ethylene and from 8% to 30% by weight of an α-olefin comonomer having from 4 to 12 carbon atoms, having a density from 0.86 to 0.91 and a molecular weight distribution (Mw/Mn) less than 3.

**2.** The composition according to claim 1, comprising one block copolymer which has the structure S-EB-S.

**3.** The composition according to claim 1 or 2, wherein the comonomer in the metallocene polyolefin is octene.

**4.** A composition according to any one of claims 1 to 3 comprising i) 90 parts by weight of the block copolymer having at least two monoalkenyl arene blocks separated by a saturated conjugated diene block and ii) from 10 to 70 parts by weight of the polymer components of the metallocene polyolefin having a density from 0.86 to 0.91, a molecular weight distribution less than 3.

**5.** The composition according to any one of claims 1 to 3 comprising

i) from 25% to 70% by weight of the block copolymer having at least two monoalkenyl arene blocks separated by a hydrogenated conjugated diene block;
ii) from 15% to 60% by weight of the polymer components of the elastomeric metallocene polyolefin having a density from 0.86 to 0.91, a molecular weight distribution less than 3;
iii)from 0% to 25% by weight of a crystalline polyolefin; and
iv) from 15% to 28% by weight of a tackifying resin.

**6.** The composition according to any one of claims 1 to 3 comprising more than one block copolymer.

**7.** The composition according to claim 6 comprising

i) from 20% to 35% by weight of a first hydrogenated block copolymer comprising at least two blocks A which are predominantly polymerised monoalkenyl arene and at least one block B which is predominantly polymerized conjugated diene the first hydrogenated block copolymer comprising from 1 to 60 percent by weight of polymerised monoalkenyl arene, having a number average molecular weight within the range of 55,000 to 200,000, and comprising less than 20% residual ethylenic unsaturation in the conjugated diene block;
ii) from 8% to 33% by weight of a second hydrogenated block copolymer comprising at least two blocks A which are predominantly polymerised monoalkenyl arene and at least one block B which is predominantly polymerized conjugated diene, the second hydrogenated block copolymer comprising from 1 to 60 percent by weight of polymerised monoalkenyl arene, having a number average molecular weight within the range of 15,000 to 85,000, and comprising less than 20% residual ethylenic unsaturation in the conjugated diene block, wherein the ratio of the molecular weight of the first hydrogenated block copolymer to the molecular weight of the second hydrogenated block copolymer is greater than 1.1:1;
iii) from 10% to 30% by weight of the metallocene polyolefin having a density from 0.86 to 0.91, a molecular weight distribution less than 3,
iv) from 10% to 30% by weight of a non-aromatic processing oil, and
v) from 5% to 15% by weight of a polymer which is compatible with the hydrogenated block copolymers.

**8.** The composition according to claim 6 or 7 wherein the number average molecular weight of the first hydrogenated block copolymer is between 60,000 and 110,000.

**9.** The composition according to any one of claims 6-8 wherein the number average molecular weight of the second hydrogenated block copolymer is between 30,000 and 60,000.

**10.** The composition according to any one of claims 1 to 7, which further comprises an extending oil.

**11.** A composition according to any one of claims 1 to 10 wherein the metallocene polyolefin has a good distribution of ethylene and from 8% to 30% by weight of an α-olefin comonomer having from 4 to 12 carbon atoms.

12. A process for producing an elastomeric film comprising the steps of providing a composition as described in any one of the preceding claims; extruding the composition throught a die, the die having a gap greater than 0.0125 cm and less than 0.305 cm; expanding the extruded film to a thickness of between 0.00125 cm and 0.0254 cm by application of differential pressure by a gas; and rapidly cooling the expanded extruded film.

13. A film comprising the composition according to any one of claims 1 to 11.


**Patentansprüche**


**Patentansprüche für folgende Vertragsstaaten : BE, DE, ES, FR, GB, IT**

1. Elastomere Zusammensetzung, umfassend ein erstes hydriertes Blockcopolymer, ein zweites hydriertes Blockcopolymer und ein Metallocenpolyolefin aus Ethylen und 8 bis 30 Gew.-% eines α-Olefincomonomers mit 4 bis 12 Kohlenstoffatomen, mit einer Dichte von 0,86 bis 0,91 und einer Molekulargewichtsverteilung (Ww/Mn) von kleiner als 3, worin sowohl das erste als auch das zweite hydrierte Blockcopolymer wenigstens zwei Blöcke A umfassen, die vorwiegend polymerisiertes Monoalkenylaren sind, und wenigstens einen Block B umfassen, der vorwiegend polymerisiertes konjugiertes Dien ist, und im konjugierten Dienblock weniger als 20% restliche ethylenische Unsättigung aufweisen, wobei das Verhältnis des zahlenmittleren Molekulargewichtes des ersten hydrierten Blockcopolymers zum zahlenmittleren Molekulargewicht des zweiten hydrierten Blockcopolymers größer als 1,1: 1 ist.

2. Zusammensetzung nach Anspruch 1, umfassend ein Blockcopolymer, das die Struktur S-EB-S aufweist.

3. Zusammensetzung nach Anspruch 1 oder 2, worin das Comonomer in dem Metallocenpolyolefin Octen ist.

4. Zusammensetzung nach einem der Ansprüche 1 bis 3, umfassend i) 90 Gewichtsteile der Blockcopolymere mit einem Gehalt an wenigstens 2 Monoalkenylarenblöcken, die durch einen gesättigten konjugierten Dienblock getrennt sind, und ii) 10 bis 70 Gewichtsteile des Metallocenpolyolefins mit einer Dichte von 0,86 bis 0,91 und einer Molekulargewichtsverteilung von kleiner als 3.

5. Elastomere Zusammensetzung, umfassend

   i) 25 bis 70 Gew.-% eines Blockcopolymers, das wenigstens 2 Monoalkenylarenblöcke aufweist, die durch einen hydrierten konjugierten Dienblock getrennt sind, der weniger als 20% restliche ethylenische Unsättigung umfaßt;
   ii) 15 bis 60 Gew.-% eines Metallocenpolyolefins von Ethylen und 8 bis 30 Gew.-% eines α-Olefincomonomers mit 4 bis 12 Kohlenstoffatomen, mit einer Dichte von 0,86 bis 0,91 und einer Molekulargewichtsverteilung (Mw/Mn) von kleiner als 3;
   iii) 0 bis 25 Gew.-% eines kristallinen Polyolefins; und
   iv) 15 bis 28 Gew.-% eines klebrigmachenden Harzes.

6. Zusammensetzung nach einem der Ansprüche 1 bis 3, umfassend

   i) 20 bis 35 Gew.-% eines ersten hydrierten Blockcopolymers, umfassend wenigstens 2 Blöcke A, die vorwiegend polymerisiertes Alkenylaren sind, und wenigstens einen Block B, der vorwiegend' polymerisiertes konjugiertes Dien ist, wobei das erste hydrierte Blockcopolymer 1 bis 60 Gew.-% polymerisiertes Monoalkenylaren umfaßt, ein zahlenmittleres Molekulargewicht im Bereich von 55.000 bis 200.000 aufweist und weniger als 20% restliche ethylenische Unsättigung im konjugierten Dienblock aufweist;
   ii) 8 bis 33 Gew.-% eines zweiten hydrierten Blockcopolymers, das wenigstens zwei Blöcke A umfaßt, die vorwiegend polymerisiertes Monoalkenylaren sind, und wenigstens einen Block B umfaßt, der vorwiegend polymerisiertes konjugiertes Dien ist, wobei das zweite hydrierte Blockcopolymer 1 bis 60 Gew.-% polymerisiertes Monoalkenylaren umfaßt, ein zahlenmittleres Molekulargewicht im Bereich von 15.000 bis 85.000 aufweist und weniger als 20% restliche ehtylenische Unsättigung des konjugierten Dienblocks aufweist, wobei das Verhältnis des zahlenmittleren Molekulargewichtes des ersten hydrierten Blockcopolymers zu dem zahlenmittleren Molekulargewicht des zweiten hydrierten Blockcopolymers größer als 1,1:1 ist;

iii) 10 bis 30 Gew.-% des Metallocenpolyolefins mit einer Dichte von 0,86 bis 0,91 und einer Molekulargewichtsverteilung von kleiner als 3;
iv) 10 bis 30 Gew.-% eines nicht-aromatischen Verarbeitungsöls, und
v) 5 bis 15 Gew.-% eines Polymers, das mit den hydrierten Blockcopolymeren verträglich ist.

**7.** Zusammensetzung nach Anspruch 6, worin das zahlenmittlere Molekulargewicht des ersten hydrierten Blockcopolymers zwischen 60.000 und 110.000 beträgt.

**8.** Zusammensetzung nach Anspruch 6 oder 7, worin das zahlenmittlere Molekulargewicht des zweiten hydrierten Blockcopolymers zwischen 30.000 und 60.000 beträgt.

**9.** Zusammensetzung nach einem der Ansprüche 1 bis 6, das weiterhin ein Strecköl umfaßt.

**10.** Zusammensetzung nach einem der Ansprüche 1 bis 9, worin das Metallocenpolyolefin eine gute Ethylenverteilung aufweist und 8 bis 30 Gew.-% eines $\alpha$-Olefincomonomers mit 4 bis 12 Kohlenstoffatomen enthält.

**11.** Verfahren zur Herstellung einer elastomeren Folie, umfassend die Stufen des Bereitstellens einer Zusammensetzung, wie in einem der vorstehenden Ansprüche beschrieben, oder einer elastomeren Zusammensetzung, die i) ein Blockcopolymer mit wenigstens 2 Monoalkenylarenblöcken, die durch einen gesättigten konjugierten Dienblock getrennt sind, der weniger als 20% restliche ethylenische Unsättigung aufweist, und ii) ein Metallocenpolyolefin von Ethylen und 8 bis 30 Gew.-% eines $\alpha$-Olefincomonomers mit 4 bis 12 Kohlenstoffatomen mit einer Dichte von 0,86 bis 0,91 und einer Molekulargewichtsverteilung (Mw/Mn) von kleiner als 3 umfaßt; ein Extrudieren der Zusammensetzung durch eine Düse, wobei die Düse eine über 0,0125 cm und unter 0,305 cm gelegene Öffnung aufweist; ein Expandieren der extrudierten Folie auf eine Stärke von 0,00125 cm bis 0,0254 cm durch Anwendung von Differentialdruck durch ein Gas; und ein rasches Abkühlen der expandierten extrudierten Folie umfaßt.

**12.** Eine Folie, umfassend die Zusammensetzung nach einem der Ansprüche 1 bis 10.

**Patentansprüche für folgenden Vertragsstaat : NL**

**1.** Elastomere Zusammensetzung, umfassend i) ein oder mehrere Blockcopolymere, die wenigstens zwei Monoalkenylarenblöcke aufweisen, die durch einen gesättigten, hydrierten, konjugierten Dienblock getrennt sind, der weniger als 20% restliche ethylenische Unsättigung umfaßt, und ii) ein Metallocenpolyolefin aus Ethylen und 8 bis 30 Gew.-% eines $\alpha$-Olefincomonomers mit 4 bis 12 Kohlenstoffatomen, mit einer Dichte von 0,86 bis 0,91 und einer Molekulargewichtsverteilung (Mw/Mn) von kleiner als 3.

**2.** Zusammensetzung nach Anspruch 1, umfassend ein Blockcopolymer, das die Struktur S-EB-S aufweist.

**3.** Zusammensetzung nach Anspruch 1 oder 2, worin das Comonomer in dem Metallocenpolyolefin Octen ist.

**4.** Zusammensetzung nach einem der Ansprüche 1 bis 3, umfassend i) 90 Gewichtsteile des Blockcopolymers mit einem Gehalt an wenigstens zwei Monoalkenylarenblöcken, die durch einen gesättigten konjugierten Dienblock getrennt sind, und ii) 10 bis 70 Gewichtsteile der Polymerkomponente des Metallocenpolyolefins mit einer Dichte von 0,86 bis 0,91 und einer Molekulargewichtsverteilung von kleiner als 3.

**5.** Zusammensetzung nach einem der Ansprüche 1 bis 3, umfassend

i) 25 bis 70 Gew.-% des Blockcopolymers, das wenigstens zwei Monoalkenylarenblöcke aufweist, die durch einen hydrierten, konjugierten Dienblock getrennt sind;
ii) 15 bis 60 Gew.-% der Polymerkomponenten des elastomeren Metallocenpolyolefins mit einer Dichte von 0,86 bis 0,91 und einer Molekulargewichtsverteilung von kleiner als 3;
iii) 0 bis 25 Gew.-% eines kristallinen Polyolefins; und
iv) 15 bis 28 Gew.-% eines klebrigmachenden Harzes.

**6.** Zusammensetzung nach einem der Ansprüche 1 bis 3, umfassend mehr als ein Blockcopolymer.

**7.** Zusammensetzung nach Anspruch 6, umfassend

i) 20 bis 35 Gew.-% eines ersten hydrierten Blockcopolymers, umfassend wenigstens zwei Blöcke A, die vorwiegend polymerisiertes Monoalkenylaren sind, und wenigstens einen Block B, der vorwiegend polymerisiertes konjugiertes Dien ist, wobei das erste hydrierte Blockcopolymer 1 bis 60 Gew.-% polymerisiertes Monoalkenylaren umfaßt, ein zahlenmittleres Molekulargewicht im Bereich von 55.000 bis 200.000 aufweist und weniger als 20% restliche ethylenische Unsättigung im konjugierten Dienblock aufweist;

ii) 8 bis 33 Gew.-% eines zweiten hydrierten Blockcopolymers, das wenigstens zwei Blöcke A umfaßt, die vorwiegend polymerisiertes Monoalkenylaren sind, und wenigstens einen Block B umfaßt, der vorwiegend polymerisiertes, konjugiertes Dien ist, wobei das zweite hydrierte Blockcopolymer 1 bis 60 Gew.-% polymerisiertes Monoalkenylaren umfaßt, ein zahlenmittleres Molekulargewicht im Bereich von 15.000 bis 85.000 aufweist und weniger als 20% restliche ethylenische Unsättigung im konjugierten Dienblock aufweist, wobei das Verhältnis des Molekulargewichtes des ersten hydrierten Blockcopolymers zu dem Molekulargewicht des zweiten hydrierten Blockcopolymers größer als 1,1:1 ist;

iii) 10 bis 30 Gew.-% des Metallocenpolyolefins mit einer Dichte von 0,86 bis 0,91 und einer Molekulargewichtsverteilung von kleiner als 3;

iv) 10 bis 30 Gew.-% eines nicht-aromatischen Verarbeitungsöls und

v) 5 bis 15 Gew.-% eines Polymers, das mit den hydrierten Blockcopolymeren verträglich ist.

**8.** Zusammensetzung nach Anspruch 6 oder 7, worin das zahlenmittlere Molekulargewicht des ersten hydrierten Blockcopolymers zwischen 60.000 und 110.000 beträgt.

**9.** Zusammensetzung nach einem der Ansprüche 6 bis 8, worin das zahlenmittlere Molekulargewicht des zweiten hydrierten Blockcopolymers zwischen 30.000 und 60.000 beträgt.

**10.** Zusammensetzung nach einem der Ansprüche 1 bis 7, die weiterhin ein Strecköl umfaßt.

**11.** Zusammensetzung nach einem der Ansprüche 1 bis 10, worin das Metallocenpolyolefin eine gute Ethylenverteilung aufweist und 8 bis 30 Gew.-% eines $\alpha$-Olefincomonomers mit 4 bis 12 Kohlenstoffatomen enthält.

**12.** Verfahren zur Herstellung einer elastomeren Folie, umfassend die Stufen des Bereitstellens einer Zusammensetzung, wie in einem der vorstehenden Ansprüche beschrieben; ein Extrudieren der Zusammensetzung durch eine Düse, wobei die Düse einen über 0,0125 cm und unter 0,305 cm betragenden Spalt aufweist; ein Expandieren der extrudierten Folie auf eine Stärke von 0,00125 cm bis 0,0254 cm durch Anwendung von Differentialdruck durch ein Gas; und ein rasches Abkühlen der expandierten extrudierten Folie.

**13.** Eine Folie, umfassend die Zusammensetzung nach einem der Ansprüche 1 bis 11.

**Revendications**

**Revendications pour les Etats contractants suivants : BE, DE, ES, FR, GB, IT**

**1.** Composition élastomère comprenant un premier copolymère bloc hydrogéné, un second copolymère bloc hydrogéné et une polyoléfine à métallocène d'éthylène et de 8 à 30 % en poids d'un comonomère d'$\alpha$-oléfine comportant de 4 à 12 atomes de carbone, ayant une densité de 0,86 à 0,91 et une distribution de poids moléculaires (Mw/Mn) inférieure à 3, dans laquelle le premier et le second copolymères blocs hydrogénés comprennent tous deux au moins deux blocs A qui sont constitués en prédominance de monoalcényl arène polymérisé et au moins un bloc B qui est constitué en prédominance de diène conjugué polymérisé, et comprennent moins de 20 % d'insaturation éthylénique résiduelle dans le bloc de diène conjugué, dans laquelle le rapport du poids moléculaire moyen numérique du premier copolymère bloc hydrogéné au poids moléculaire moyen numérique du second copolymère bloc hydrogéné est plus grand que 1,1/1.

**2.** Composition suivant la revendication 1, comprenant un copolymère bloc qui a la structure S-EB-S.

**3.** Composition suivant l'une ou l'autre des revendications 1 et 2, dans laquelle le comonomère dans la polyoléfine à métallocène est l'octène.

**4.** Composition suivant l'une quelconque des revendications 1 à 3, comprenant i) 90 parties en poids des copolymères blocs comportant au moins deux blocs de monoalcényl arène séparés par un bloc de diène conjugué saturé et ii) de 10 à 70 parties en poids des composants de polymère de la polyoléfine à métallocène ayant une densité de 0,86 à 0,91, une distribution de poids moléculaires inférieure à 3.

**5.** Composition élastomère comprenant :

   i) de 25 % à 70 % en poids d'un copolymère bloc comportant au moins deux blocs de monoalcényl arène séparés par un bloc de diène conjugué hydrogéné comprenant moins de 20 % d'insaturation éthylénique résiduelle;

   ii) de 15 % à 60 % en poids d'une polyoléfine à métallocène d'éthylène et de 8 % à 30 % en poids d'un comonomère d'$\alpha$-oléfine comportant de 4 à 12 atomes de carbone, ayant une densité de 0,86 à 0,91 et une distribution de poids moléculaires (Mw/Mn) inférieure à 3;

   iii) de 0 % à 25 % en poids d'une polyoléfine cristalline; et

   iv) de 15 % à 28 % en poids d'une résine assurant un collage.

**6.** Composition suivant l'une quelconque des revendications 1 à 3, comprenant :

   i) de 20 % à 35 % en poids d'un premier copolymère bloc hydrogéné comprenant au moins deux blocs A qui sont constitués en prédominance d'alcényl arène polymérisé et au moins un bloc B qui est constitué en prédominance de diène conjugué polymérisé, le premier copolymère bloc hydrogéné comprenant de 1 à 60 % en poids de mini alcényl arène polymérisé, ayant un poids moléculaire moyen numérique dans la gamme de 55.000 à 200.000, et comprenant moins de 20 % d'insaturation éthylénique résiduelle dans le bloc de diène conjugué;

   ii) de 8 % à 33 % en poids d'un second copolymère bloc hydrogéné comprenant au moins deux blocs A qui sont constitués en prédominance de mini alcényl arène polymérisé et au moins un bloc B qui est constitué en prédominance de diène conjugué polymérisé, le second copolymère bloc hydrogéné comprenant de 1 à 60 % en poids de mini alcényl arène polymérisé, ayant un poids moléculaire moyen numérique dans la gamme de 15.000 à 85.000, et comprenant moins de 20 % d'insaturation éthylénique résiduelle du bloc de diène conjugué, dans laquelle le rapport du poids moléculaire moyen numérique du premier copolymère bloc hydrogéné au poids moléculaire moyen numérique du second copolymère bloc hydrogéné est plus grand que 1,1/1;

   iii) de 10 % à 30 % en poids de la polyoléfine à métallocène ayant une densité de 0,86 à 0,91, une distribution de poids moléculaires inférieure à 3,

   iv) de 10 % à 30 % en poids d'une huile de traitement non aromatique; et

   v) de 5 % à 15 % en poids d'un polymère qui est compatible avec les copolymères blocs hydrogénés.

**7.** Composition suivant la revendication 6, dans laquelle le poids moléculaire moyen numérique du premier copolymère bloc hydrogéné se situe entre 60.000 et 110.000.

**8.** Composition suivant l'une ou l'autre des revendications 6 et 7, dans laquelle le poids moléculaire moyen numérique du second copolymère bloc hydrogéné se situe entre 30.000 et 60.000.

**9.** Composition suivant l'une quelconque des revendications 1 à 6, qui comprend de plus une huile d'allongement.

**10.** Composition suivant l'une quelconque des revendications 1 à 9, dans laquelle la polyoléfine à métallocène a une bonne distribution d'éthylène et de 8 % à 30 % en poids d'un comonomère d'$\alpha$-oléfine comportant de 4 à 12 atomes de carbone.

**11.** Procédé de production d'un film élastomère comprenant les étapes de formation d'une composition suivant l'une quelconque des revendications précédentes ou d'une composition élastomère comprenant i) un copolymère bloc comportant au moins deux blocs de monoalcényl arène séparés par un bloc de diène conjugué saturé comprenant moins de 20 % d'insaturation éthylénique résiduelle et ii) une polyoéfine à métallocène d'éthylène et de 8 % à 30 % en poids d'un comonomère d'$\alpha$-oléfine comportant de 4 à 12 atomes de carbone, ayant une densité de 0,86 à 0,91 et une distribution de poids moléculaires (Mw/Mn) inférieure à 3, d'extrusion de la composition par une filière, la filière ayant une ouverture supérieure à 0,0125 cm et inférieure à 0,305 cm, d'expansion du film extrudé à une épaisseur entre 0,00125 cm et 0,0254 cm par application d'une pression différentielle par un gaz, et de refroidissement rapide du film extrudé expansé.

**12.** Film comprenant la composition suivant l'une quelconque des revendications 1 à 10.

**Revendications pour l'Etat contractant suivant : NL**

**1.** Composition élastomère comprenant i) un ou plusieurs copolymères blocs comportant au moins deux blocs de monoalcényl arène séparés par un bloc de diène conjugué saturé comprenant moins de 20% d'insaturation éthylénique résiduelle et ii) une polyoléfine à métallocène d'éthylène et de 8% à 30% en poids d'un comonomère d'$\alpha$-oléfine comportant de 4 à 12 atomes de carbone, ayant une densité de 0,86 à 0,91 et une distribution de poids moléculaires (Mw/Mn) inférieure à 3.

**2.** Composition suivant la revendication 1, comprenant un copolymère bloc qui a la structure S-EB-S.

**3.** Composition suivant l'une ou l'autre des revendications 1 et 2, dans laquelle le comonomère dans la polyoléfine à métallocène est de l'octène.

**4.** Composition suivant l'une quelconque des revendications 1 à 3, comprenant i) 90 parties en poids du copolymère bloc comportant au moins deux blocs de monoalcényl arène séparés par un bloc de diène conjugué saturé et ii) de 10 à 70% en poids des composants de polymère de la polyoléfine à métallocène ayant une densité de 0,86 à 0,91, une distribution de poids moléculaires inférieure à 3.

**5.** Composition suivant l'une quelconque des revendications 1 à 3, comprenant :

i) de 25% à 70% en poids du copolymère bloc comportant au moins deux blocs de monoalcényl arène séparés par un bloc de diène conjugué hydrogéné;
ii) de 15% à 60% en poids des composants de polymère de la polyoléfine à métallocène élastomère ayant une densité de 0,86 à 0,91, une distribution de poids moléculaires inférieure à 3;
iii) de 0% à 25% en poids d'une polyoléfine cristalline; et
iv) de 15% à 28% en poids d'une résine assurant un collage.

**6.** Composition suivant l'une quelconque des revendications 1 à 3, comprenant plus d'un copolymère bloc.

**7.** Composition suivant la revendication 6, comprenant :

i) de 20% à 35% en poids d'un premier copolymère bloc hydrogéné comprenant au moins deux blocs A qui sont en prédominance du monoalcényl arène polymérisé et au moins un bloc B qui est en prédominance du diène conjugué polymérisé, le premier copolymère bloc hydrogéné comprenant de 1 à 60% en poids de monoalcényl arène polymérisé, ayant un poids moléculaire moyen numérique allant de 55.000 à 200.000, et comprenant moins de 20% d'insaturation éthylénique résiduelle dans le bloc de diène conjugué;
ii) de 8% à 33% en poids d'un second copolymère bloc hydrogéné comprenant au moins deux blocs A qui sont en prédominance du monoaicényl arène polymérisé et au moins un bloc B qui est en prédominance du diène conjugué polymérisé, le second copolymère bloc hydrogéné comprenant de 1 à 60% en poids de monoalcényl arène polymérisé, ayant un poids moléculaire moyen numérique allant de 15.000 à 85.000, et comprenant moins de 20% d'insaturation éthylénique résiduelle dans le bloc de diène conjugué, dans laquelle le rapport du poids moléculaire du premier copolymère bloc hydrogéné au poids moléculaire du second copolymère bloc hydrogéné est supérieur à 1,1/1;
iii) de 10% à 30% en poids de la polyoléfine à métallocène ayant une densité de 0,86 à 0,91, une distribution de poids moléculaires inférieure à 3;
iv) de 10% à 30% en poids d'une huile de traitement non aromatique; et
v) de 5% à 15% en poids d'un polymère qui est compatible avec les copolymères blocs hydrogénés.

**8.** Composition suivant l'une ou l'autre des revendications 6 et 7, dans laquelle le poids moléculaire moyen numérique du premier copolymère bloc hydrogéné se situe entre 60.000 et 110.000.

**9.** Composition suivant l'une quelconque des revendications 6 à 8, dans laquelle le poids moléculaire moyen numérique du second copolymère bloc hydrogéné se situe entre 30.000 et 60.000.

**10.** Composition suivant l'une quelconque des revendications 1 à 7, qui comprend de plus une huile d'allongement.

**11.** Composition suivant l'une quelconque des revendications 1 à 10, dans laquelle la polyoléfine à métallocène a une bonne distribution d'éthylène et de 8% à 30% en poids d'un comonomère d'$\alpha$-oléfine comportant de 4 à 12 atomes de carbone.

**12.** Procédé de production d'un film élastomère comprenant les étapes de formation d'une composition telle que décrite dans l'une quelconque des revendications précédentes, d'extrusion de la composition par une filière, la filière comportant une ouverture de plus de 0,0125 cm et de moins de 0,305 cm, d'expansion du film extrudé à une épaisseur entre 0,00125 cm et 0,0254 cm par application d'une pression différentielle par un gaz, et de refroidissement rapide du film extrudé expansé.

**13.** Film comprenant la composition suivant l'une quelconque des revendications 1 à 11.